# EUROPEAN PATENT APPLICATION

(11) **EP 3 982 696 A1**
(43) Date of publication of application: **13.04.2022**
(21) Application number: 20822274.5
(22) Date of filing: 27.04.2020
(51) Int. Cl.: H04W 88/06, H04W 68/02, H04W 8/18, H04W 72/04, H04W 28/16

(54) **DUAL-CARD UE DATA TRANSMISSION METHOD AND DEVICE, STORAGE MEDIUM AND USER EQUIPMENT**

(30) Priority: 10.06.2019 CN 201910497715
(71) Applicant: Spreadtrum Communications (Shanghai) Co., Ltd., Shanghai 201203 (CN)
(72) Inventor: GU, Xiangxin, Shanghai 201203 (CN); XU, Jin, Shanghai 201203 (CN); HAN, Wei, Shanghai 201203 (CN); FAN, Wei, Shanghai 201203 (CN); DENG, Yun, Shanghai 201203 (CN); CHEN, Weifeng, Shanghai 201203 (CN); SUN, Qiang, Shanghai 201203 (CN)
(74) Representative: Zimmermann, Tankred Klaus
(86) International application number: PCT/CN2020/087198
(87) International publication number: WO 2020/248733

(57) **Abstract**

Disclosed are a dual-card UE data transmission method and device, a storage medium, and a user equipment. The dual-card UE comprises a first SIM card and a second SIM card. The method comprises: determining, when the first SIM card is in a connected state, the wireless operation requirement of the second SIM card, wherein the first SIM card is connected to a first service base station; at least requesting, according to the wireless operation requirement, the first service base station for a non-data transmission time slot or radio frequency resources; and at least using the non-data transmission time slot or radio frequency resources to execute wireless operation of the second SIM card. The technical solution of the present invention may improve the data transmission performance when two SIM cards of the dual-card UE share a communication baseband.

## Description

### CROSS-REFERENCE TO RELATED APPLICATIONS

This application claims priority to Chinese Patent Application No. 201910497715.5, filed on June 10, 2019, and entitled "DUAL-CARD UE DATA TRANSMISSION METHOD AND DEVICE, STORAGE MEDIUM AND USER EQUIPMENT", the entire disclosure of which is incorporated herein by reference.

### TECHNICAL FIELD

The present disclosure generally relates to communication technology field, and more particularly, to a dual-card UE data transmission method and device, storage medium and user equipment.

### BACKGROUND

A dual-card User Equipment (UE) refers to a terminal equipment which is adapted to use two Subscriber Identification Modules (SIMs) (hereinafter referred to as SIM1 and SIM2). The two SIM cards of the dual-card UE may need to occupy a communication baseband circuit and a radio frequency circuit at the same time. For example, when the SIM1 is in a connection state, the SIM2 needs to perform radio transmission or reception such as paging reception, system message reception, signal measurement and cell search. Serving as an exemplary illustration, when a paging is received by the SIM2, or an on demand system message is requested by the SIM2 through a Radio Resource Control (RRC), or an access of the SIM2 is initiated by a user so an operation of accessing a network is performed. What's more, when the two SIM cards are in the connection state, and two base stations are needed for a data transmission by scheduling a UE through time division. Therefore, it is necessary to solve the problem that the two SIM cards occupy the communication baseband at the same time when the two SIM cards share one set of communication baseband and radio frequency.

In an existing technology, for solving the problem that the two SIM cards occupy the communication baseband at the same time, one way includes that a UE transmits or receives on one channel based on a priority of a service, and discards transmission or reception on the other channel. Another way includes that the UE transmits an uplink data buffer information in advance to inform a base station that there is no uplink data to transmit when transmission or reception working on the other channel is needed, after the baseband circuit and the radio frequency circuit are released on the other channel, the UE transmits a Scheduling Request and then transmits an uplink data buffer information in an uplink transmission opportunity obtained subsequently to inform the base station of an actual amount of data that needs to be transmitted.

However, with the first existing technology, a UE may not be paged successfully, which may lower a data transmission performance, waste network radio resources, and further affect network operation indicators. With the first existing technology, a smoothness of data transmission may be impacted and thus an efficiency of a data transmission may be reduced.

### SUMMARY

Embodiments in the present disclosure provide a method for transmitting a dual-card UE data.

In an embodiment of the present disclosure, a method for transmitting a dual-card UE data is provided. The method includes: determining a request of a radio transmission or reception of the second SIM card while the first SIM card is in a connection state, wherein the first SIM card is connected with a first serving base station; requesting a time gap of a non-data transmission or a radio frequency circuit chain from the first serving base station based on the request of the radio transmission or reception; and performing the radio transmission or reception of the second SIM card at least utilizing the time gap of the non-data transmission or the radio frequency circuit chain.

In some embodiment, said requesting the time gap of the non-data transmission from the first serving base station based on the request of the radio transmission or reception includes: determining a starting time point of the request of the radio transmission or reception of the second SIM card; and requesting the time gap of the non-data transmission from the first serving base station based on the request of the radio transmission or reception at a time point a first offset ahead of the starting time point.

In some embodiment, said requesting the time gap of the non-data transmission from the first serving base station based on the request of the radio transmission or reception includes: transmitting a request to the first serving base station for a periodic time gap of a non-data transmission, in response to a service to which the request of the radio transmission or reception belongs being a periodic service, and the request includes a period, a starting time point and a duration of the periodic time gap of the non-data transmission.

In some embodiment, said requesting the time gap of the non-data transmission from the first serving base station based on the request of the radio transmission or reception includes: requesting the time gap of the non-data transmission and a first subsequent periodic offline mode from the first serving base station in response to the request of the radio transmission or reception being to access a network, wherein an offline time of the first subsequent periodic offline mode from the first serving base station can be used for a data transmission after the second SIM card in a connection state.

In some embodiment, said requesting the time gap of the non-data transmission and the first subsequent periodic offline mode includes: determining a starting time point of the request of the radio transmission or reception of the second SIM card; requesting the time gap of the non-data transmission from the first serving base station at a time point a first offset ahead of the starting time point; and requesting the first subsequent periodic offline mode from the first serving base station at a time point a second offset ahead of the starting time point, wherein parameters of the first subsequent periodic offline mode comprises a period, a starting position and a duration of each offline.

In some embodiment, said performing the radio transmission or reception of the second SIM card at least by the time gap of the non-data transmission includes: performing an access between the second SIM card and a second serving base station by the time gap of the non-data transmission; and requesting a second subsequent periodic offline mode from the second serving base station after the second SIM card accesses the second serving base station, wherein parameters of the second subsequent periodic offline mode includes a period, a starting point and a duration of each offline, wherein an offline time of the second subsequent periodic offline mode from the second serving base station can be used for a data transmission of the first SIM card.

In some embodiment, the method further includes: requesting another time gap of a non-data transmission from the second serving base station, in response to the offline time of the first subsequent periodic offline mode from the first serving station not satisfying a service need between the second SIM card and the second serving base station after the second SIM card accesses to the second serving base station; and requesting another first subsequent periodic offline mode from the first serving base station based on the another time gap of the non-data transmission.

In some embodiment, said requesting the radio frequency circuit chain from the first serving base station based on the request of the radio transmission or reception includes: requesting the first serving base station to release radio frequency circuit chains working on at least one channel among radio frequency circuit chain working on at least two channels, in response to the request of the radio transmission or reception being to access a network and the first SIM card being in a Carrier Aggregation state and using the radio frequency circuit chains working on the at least two channels.

In some embodiment, said requesting the radio frequency circuit chain from the first serving base station based on the request of the radio transmission or reception includes: requesting the first serving base station to release a radio frequency circuit chain on one corresponding connection of a Dual-Connection, in response to the request of the radio transmission or reception being to access a network and the first SIM card being in a Dual-Connection.

In some embodiment, the request of the radio transmission or reception includes a network access, a paging reception, a system message reception, a signal measurement and a cell search.

In an embodiment of the present disclosure, a device for transmitting a dual-card UE data is provided, the device includes: a circuitry for determining a request of a radio transmission or reception , adapted to determine a request of a radio transmission or reception of the second SIM card while the first SIM card is in a connection state, wherein the first SIM card is corrected with a first serving base station; a requesting circuitry, adapted to request a time gap of a non-data transmission or a radio frequency circuit chain from the first serving base station based on the request of the radio transmission or reception; and an operating circuitry, adapted to perform the radio transmission or reception of the second SIM card at least by the time gap of the non-data transmission or the radio frequency circuit chain.

In an embodiment of the present disclosure, a storage medium having computer instructions stored therein is provided, wherein once the computer instructions are executed, the method based on any one of above method is performed.

In an embodiment of the present disclosure, a user terminal including a memory and a processor is provided, wherein the memory has computer instructions stored therein, and the method based on any one above method is performed, once the processor executes the computer instructions.

Embodiments of the present disclosure have following benefits:
In embodiments of the present disclosure, when the first SIM card is connected with the first serving base station, a radio transmission or reception of the second SIM card is performed by requesting the time gap of the non-data transmission or the radio frequency circuit chain from the first serving base station, thus, a service of the second SIM card can be performed with as little impact as possible on a service of the first SIM card. That is, through a coordination between the dual-card UE and the base stations, a waste of radio resource can be avoided, and data transmission performances of the two SIM cards of the dual-card UE can be improved.

Further, if the radio transmission or reception is the request to access a network, the time gap of the non-data transmission and the first subsequent periodic offline mode are requested from the first serving base station to transmit the data of the second SIM card. In the embodiment of the present disclosure, the radio transmission or reception of the second SIM card can be performed by requesting the time gap of the non-data transmission from the first serving base station, and the data transmission of the second SIM card can be performed by requesting the first subsequent periodic offline mode from the first serving base station, which can ensure the data transmission performance of the second SIM card.

Further, after the second SIM card accesses to the second serving base station, the new time gap of the non-data transmission is requested from the second serving base station if the offline time of the first subsequent periodic offline mode from the first serving station cannot satisfy a service need between the second SIM card and the second serving base station; and the another first subsequent periodic offline mode is requested from the first serving base station based on the another time gap of the non-data transmission. According to the embodiment of the present disclosure, if the offline time of the first subsequent periodic offline mode from the first serving station cannot satisfy the service need between the second SIM card and the second serving base station, the dual-card UE can be scheduled through time division by the coordination between the first serving base station and the second serving base station, which further ensures the data transmission performances of the second SIM card.

### BRIEF DESCRIPTION OF THE DRAWINGS

FIG. 1 schematically illustrates a flowchart of a method for transmitting a dual-card UE data according to an embodiment of the present disclosure;
FIG. 2 schematically illustrates a part of a flowchart of a method for transmitting a dual-card UE data according to an embodiment of the present disclosure;
FIG. 3 schematically illustrates a flowchart of a specific implementation of S103 shown in FIG. 1;
FIG. 4 schematically illustrates a part of a flowchart of a method for transmitting a dual-card UE data according to another embodiment of the present disclosure;
FIG. 5 schematically illustrates a diagram of a specific application scenario of an embodiment of the present disclosure; and
FIG. 6 schematically illustrates a structure diagram of a device for transmitting a dual-card UE data according to an embodiment of the present disclosure.

### DETAILED DESCRIPTION

As described in the background, with the first existing technology, UE may not be paged successfully, which may lower a data transmission performance, waste network radio resources, and affect network operation indicators. With the second existing technology, the smoothness of a data transmission may be impacted and an efficiency of a data transmission may be reduced.

In embodiments of the present disclosure, when a first SIM card is connected with a first serving base station, a radio transmission or reception of a second SIM card is performed by requesting a time gap of a non-data transmission or a radio frequency circuit chain from the first serving base station, thus, a service of the second SIM card is performed with as little impact as possible on a service of the first SIM card. That is, through a coordination between a dual-card UE and the base stations, a waste of radio resource can be avoided, and data transmission performances of the two SIM cards of the dual-card UE can be improved.

The "time gap of a non-data transmission" as described in the embodiment of the present disclosure includes an offline duration of a current serving base station, and the time gap of the non-data transmission can be used to perform a radio transmission or reception for other serving base stations. For example, a current serving base station is a base station connected with a first SIM card, other serving base stations can be base stations connected with a second SIM card.

The "first subsequent periodic offline mode" in the embodiment of the present disclosure includes a period, a starting time point and a duration of each offline, the duration of each offline of the first subsequent periodic offline mode from the first serving base station can be used for a data transmission of the second SIM card.

Similarly, the "second subsequent periodic offline mode" in the embodiment of the present disclosure includes a period, a starting time point and a duration of each offline, the duration of each offline of the second subsequent periodic offline mode from the second serving base station can be used for a data transmission of the first SIM card.

In order to clarify the object, characteristic and advantages of embodiments of the present disclosure, the embodiments of present disclosure will be described clearly in detail in conjunction with accompanying drawings.

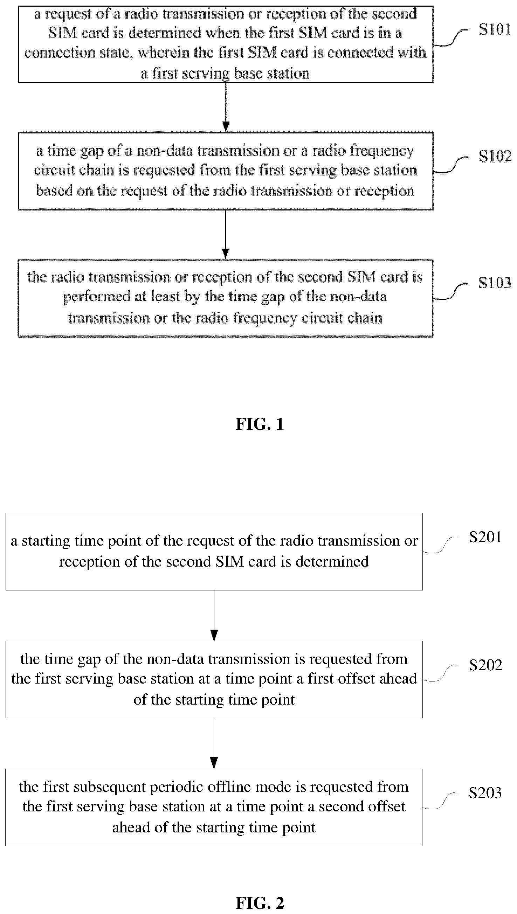

FIG. 1 schematically illustrates a flowchart of a method for transmitting a dual-card UE data according to an embodiment of the present disclosure.

In the embodiment of the present disclosure, the dual-card UE is adapted for installing a first SIM card and a second SIM card. It can be understood that the first SIM card may be either of SIM cards of the dual-card UE, and the second SIM card is the other SIM card. The first SIM card and the second SIM card is not intended to limit their scope.

Similarly, in the embodiment of the present disclosure, the first SIM card may access to a first serving base station and establish a connection with the first serving base station, and the second SIM card may access to a second serving base station and establish a connection with the second serving base station. The first serving base station and the second serving base station is not intended to limit their scope.

The method for transmitting a dual-card UE data in the embodiment of the present disclosure can be performed by the dual-card UE, that is, the dual-card UE may be used to perform processes as shown in FIG. 1, further details of the processes can be referred as in S101, S102 and S103.

In S101, a request of a radio transmission or reception of the second SIM card is determined when the first SIM card is in a connection state, wherein the first SIM card is connected with a first serving base station.

In S102, a time gap of a non-data transmission or a radio frequency circuit chain is requested from the first serving base station based on the request of the radio transmission or reception.

In S103, the radio transmission or reception of the second SIM card is performed at least by the time gap of the non-data transmission or the radio frequency circuit chain.

It should be noted that sequence numbers of S101, S102 and S103 in the embodiment is not intended to limit the execution order of S101, S102 and S103.

In a specific implementation, when the first SIM card is in a connection state, that is, when the first card is connected with a first serving base station, the first SIM card uses a baseband radio frequency to transmit data with the first serving base station. In this case, the second SIM card has a need to perform a radio transmission or reception.

In a specific implementation, the radio transmission or reception may include a network access, a paging reception, a system message reception, a signal measurement or a cell search.

It should be noted that in an actual application environment, a radio transmission or reception may also include any other executable service operation, which is not intended to limit the embodiment of the present disclosure.

In a specific implementation of S101, the request of the radio transmission or reception of the second SIM card can be determined by the dual-card UE. For example, the second SIM card needs to perform a paging reception.

In a specific implementation of S102, the time gap of the non-data transmission or the radio frequency circuit chain can be requested from the first serving base station by the dual-card UE for the radio transmission or reception of the second SIM card. Specifically, the time gap of the non-data transmission may be a period of time including a starting time point and a duration.

In a specific implementations, the dual-card UE can request the time gap of the non-data transmission or the radio frequency circuit chain through a Channel Element (CE) or an Uplink Control Information (UCI) in the Media Access Control (MAC) layer.

Furthermore, in addition to requesting the time gap of the non-data transmission or the radio frequency circuit chain from the first serving base station, the dual-card UE can also request other time resources from the first serving base station for other services other than the radio transmission or reception listed above, such as a data transmission. For example, the first subsequent periodic offline mode can be requested from a first serving base station for a service of data transmission after the second SIM card accesses to the second serving base station.

The first serving base station may allocate the time gap of the non-data transmission for the dual-card UE in response to the request of the dual-card UE. And in a specific embodiment of S103, the dual-card UE can perform the radio transmission or reception of the second SIM card by the time gap of the non-data transmission or the radio frequency circuit chain.

That is to say, if the first SIM card and the second SIM card share one set of baseband radio frequency, the set of baseband radio frequency can be time-division multiplexed, that is, a radio transmission or reception of the second SIM card can be performed in the time gap of the non-data transmission, and the data transmission of the first SIM card can be performed in other time. If the first SIM card and the second SIM card use two sets of baseband radio frequency, the radio transmission or reception of the second SIM card can be performed by requesting the first serving base station to release one set of the radio frequency circuit chain.

In the embodiment of the present disclosure, when the first SIM card is connected with the first serving base station, the radio transmission or reception of the second SIM card may be performed by requesting the time gap of the non-data transmission or the radio frequency circuit chain from the first serving base station, which have as little impact as possible on a service of the first SIM card when performing a service of the second SIM card. That is, through a coordination between the dual-card UE and the base stations, a waste of radio resource can be avoided, and data transmission performances of the two SIM cards of the dual-card UE can be improved.

In a specific application scenario, a dual-card UE is a UE with one set of baseband radio frequency, a first SIM card and a second SIM card (hereinafter referred to as SIM1 and SIM2) belong to different operators, and both work in a LTE mode, a timing of a base station of SIM1 and a timing of a base station of SIM2 are synchronized, SIM1 is in a connection state, and SIM2 receives a paging to perform an access. The dual-card UE requests the first serving base station through a MAC CE for a time gap of a non-data transmission of 32ms which starts at 8ms later, and also requests a first subsequent periodic offline mode (also referred to as an off service duration pattern1). Wherein, a starting time point of the off service duration pattern1 is 40ms, a period is 10ms, and a duration is 5ms.

Subsequently, the dual-card UE performs an access to the second serving base station in the time gap of the non-data transmission of 32ms, and requests a second subsequent periodic offline mode (also referred to as an off service duration pattern2) through a MAC CE at the time point of 32ms. Wherein, a starting time point of the off service duration pattern 2 is 45ms, a period is 10ms, and a duration is 5ms.

In another specific application scenario, a dual-card UE is a UE with one set of baseband radio frequency, SIM1 and SIM2 belong to different operators, and both work in LTE mode, a timing of a base station of SIM1 and a timing of a base station of SIM2 are not synchronized, SIM1 is in a connection state, and SIM2 needs to perform a paging reception. The dual-card UE informs the first serving base station through a UCI that a time gap of 2 ms of a non-data transmission is needed starting at 4 ms later from a current subframe for the SIM2 paging reception.

In a non-limiting embodiment of the present disclosure, S102 shown in FIG. 1 may include: a starting time point of the radio transmission or reception of the second SIM card is determined; and the time gap of the non-data transmission is requested from the first serving base station based on the request of the radio transmission or reception at a time point a first offset ahead of the starting time point.

In the embodiment of the present disclosure, the dual-card UE need to request the time gap of the non-data transmission in advance of a certain time to ensure the radio transmission or reception of the second SIM card can progress smoothly.

The first offset *offset 1* can be informed to the dual-card UE by the first serving base station through a System Information Block (SIB) or a dedicated signaling, or it can also be agreed by a standard protocol, which is not limited in the embodiment of the present disclosure.

In a non-limiting embodiment of the present disclosure, S102 shown in FIG. 1 may include: if a service to which the request of the radio transmission or reception belongs is a periodic service, the request is transmitted to the first serving base station for requesting a periodic time gap of a non-data transmission, and the request includes a period, a starting time point and a duration of the periodic time gap of the non-data transmission.

In a specific implementation, if a service to which the request of the radio transmission or reception belongs is a periodic service, such as a paging service, a pattern, that is, a period, a starting time point and a duration can be provided to the first serving base station by the dual-card UE for requesting the periodic time gap of the non-data transmission.

Specifically, the request can be transmitted by a Channel Element (CE) or a RRC signaling of a Media Access Control (MAC) layer. In a specific implementation, a value or a range of the starting point T can be configured by a serving base station through a SIB or a dedicated signaling, or can be agreed by a communication standard protocol.

Wherein, the pattern of the periodic time gap of the non-data transmission may not conform to a current Discontinuous Reception configuration, and the request also need to be sent a certain time in advance, such as a second offset ahead of the starting time point of the radio transmission or reception.

In addition, the dual-card UE can also request the first serving base station to close the obtained periodic time gap of the non-data transmission.

In a non-limiting embodiment of the present disclosure, S102 shown in FIG. 1 may include: if the request of the radio transmission or reception is to access a network, a time gap of the non-data transmission and a first subsequent periodic offline mode are requested from the first serving base station, an offline time of the first subsequent periodic offline mode from the first serving base station can be used for a data transmission.

In the embodiment of the present disclosure, if the request of the radio transmission or reception is to access a network, that is, the second SIM card needs to access to the second serving base station, in addition to request the time gap of the non-data transmission for connecting the second SIM card to the second serving base station, the dual-card UE can also request a first subsequent periodic offline mode to obtain a time for the data transmission between the second SIM card and the second serving base station.

Further, referring to FIG. 2, the above processing may specifically include S201, S202 and S203.

In S201, a starting time point of the request of the radio transmission or reception of the second SIM card is determined.

In S202, the time gap of the non-data transmission is requested from the first serving base station at a time point a first offset ahead of the starting time point.

In S203, the first subsequent periodic offline mode is requested from the first serving base station at a time point a second offset ahead of the starting time point.

In a specific implementation, the dual-card UE informs the first serving base station through a MAC CE or a UCI the first offset *offset1* ahead of the starting time point T that the time gap of the non-data transmission is requested, including a starting time point and a duration of the time gap of non-data transmission.

The dual-card UE requests a first subsequent periodic offline mode from the first serving base station at the second offset *offset2* ahead of the starting time point T, that is, the service of data transmission of the second SIM card needs to be performed periodically at a time after the starting time point T.

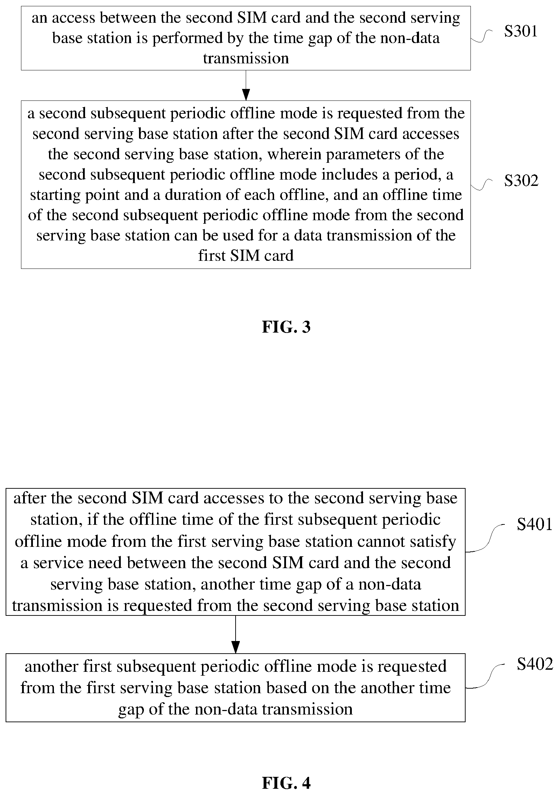

Further, referring to FIG.3, S103 shown in FIG. 1 may include S301, S302 and S303.

In S301, an access between the second SIM card and the second serving base station is performed by the time gap of the non-data transmission.

In S302, a second subsequent periodic offline mode is requested from the second serving base station after the second SIM card accesses the second serving base station, wherein parameters of the second subsequent periodic offline mode includes a period, a starting point and a duration of each offline, and an offline time of the second subsequent periodic offline mode from the second serving base station can be used for a data transmission of the first SIM card.

In the embodiment of the present disclosure, the first SIM card of the dual-card UE is connected with the first serving base station, the dual-card UE can perform the access between the second SIM card and the second serving base station in the time gap of the non-data transmission to connect the second SIM card with the second serving base station.

After the second SIM card is connected with the second serving base station, the dual-card UE can request the second subsequent periodic offline mode from the second serving base station, for performing the data transmission between the first SIM card and the first serving base station by the second subsequent periodic offline mode.

Further, if the request of the first subsequent periodic offline mode cannot satisfy a service request after the second SIM card accesses to the second serving base station, the time gap of the non-data transmission can be requested to update, referring to FIG.4, which specifically include S401, and S402.

In S401, after the second SIM card accesses to the second serving base station, if the offline time of the first subsequent periodic offline mode from the first serving base station cannot satisfy a service need between the second SIM card and the second serving base station, another time gap of a non-data transmission is requested from the second serving base station.

In S402, another first subsequent periodic offline mode is requested from the first serving base station based on the another time gap of the non-data transmission.

In the embodiment of the present disclosure, since the second SIM card is already connected with the second serving base station, if the another first subsequent periodic offline mode needs to be requested from the first serving base station, it is necessary to request another time gap of a non-data transmission from the second serving base station first. The another time gap of the non-data transmission can be used for the dual-card UE to request the another first subsequent periodic offline mode from the first serving base station.

In a specific application scenario, a dual-card UE is a UE with one set of baseband radio frequency, a first SIM card and a second SIM card (hereinafter referred to as SIM1 and SIM2) belong to different operators or a same operator, the SIM1 works in a Wideband Code Division Multiple Access (W-CDMA) connection mode to serve voice services, and a period of the occupation for the baseband and the radio frequency by SIM1 is 20ms. When SIM2 works in a Long Term Evolution (LTE) mode and needs to perform an access, the occupation pattern for the baseband and the radio frequency by SIM1 is directly used for requesting an off service duration during the access process.

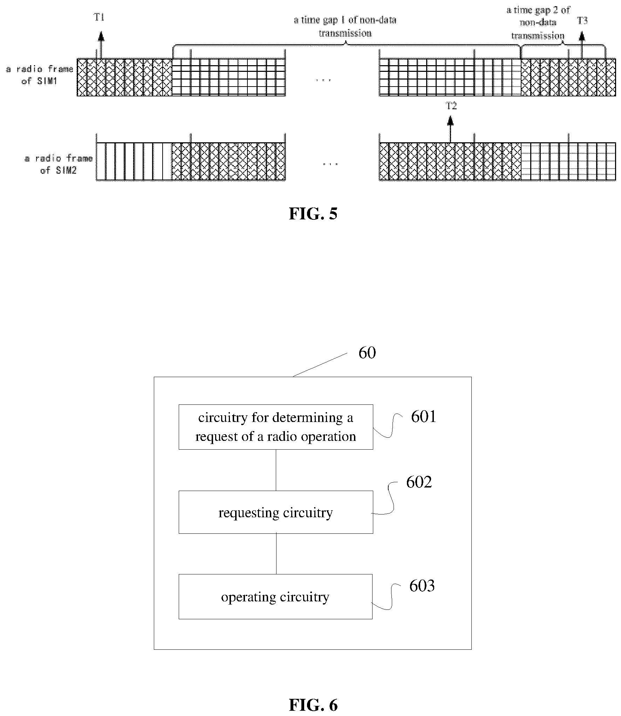

In another specific application scenario, referring to FIG. 5, SIM1 works in a LTE connection mode for data services, SIM2 works in a WCDMA mode and needs to perform an access, the UE requests the first serving base station through a MAC CE for a time gap 1 of a non-data transmission 92ms of starting at 8ms later from a time point T1, and also requests a first subsequent periodic offline mode (a starting point of the time is 100ms, a period is 10ms, and a duration is 5ms). Subsequently, the dual-card UE performs an access to the second serving base station within the time gap of the non-data transmission of 92ms, if the access of SIM2 is for a voice service and the offline time of the first subsequent periodic offline mode obtained from the base station of SIM1 cannot satisfy a voice data transmission of SIM2, the dual-card UE needs to request another first subsequent periodic offline mode from the second serving base station. Thus, the dual-card UE can request another time gap 2 of a non-data transmission from the first serving base station at a time point T2. The dual-card UE requests another first subsequent periodic offline mode from the first serving base station through a MAC CE at a time point 3 of the another time gap 2 of the non-data transmission.

In a specific implementation, S102 may include: if the request of the radio transmission or reception is to access a network and the first SIM card is in a Carrier Aggregation state and uses the radio frequency circuit chains working on at least two channels, the first serving base station is requested to release a radio frequency circuit chain working on at least one channel among the radio frequency circuit chains working on the two channels.

In the embodiment of the present disclosure, since a Carrier Aggregation can aggregate a plurality of carriers together, if the first SIM card is in the Carrier Aggregation state and uses radio frequency circuit chains working on at least two channels, the dual-card UE can request the first serving base station to release a radio frequency circuit chain working on at least one channel among the radio frequency circuit chains working on two channels for the access of the second SIM card.

In another specific implementation, S102 may include: if the request of the radio transmission or reception is to access a network and the first SIM card is in a Dual-Connection, the first serving base station is requested to release a radio frequency circuit chain on one corresponding connection of a Dual-Connection.

In the embodiment of the present disclosure, the first SIM card is in the dual connection state means that the first SIM card accesses two base stations at the same time and occupies two radio frequency circuit chains. Therefore, the dual-card UE can request the first serving base station to release one set of the corresponding radio frequency circuit chains for the access of the second SIM card.

In a specific application scenario, a dual-card UE is a UE with two sets of baseband radio frequency, SIM1 and SIM2 belong to different operators or a same operator, and both work in a LTE mode, SIM1 card is in the Dual-Connection and occupies two radio frequency circuit chains, SIM2 needs to perform an access, the first serving base station is requested to release a second connection through a RRC Assistant Information, subsequently, the RRC Reconfiguration signaling transmitted by the first serving base station is received to release the second connection, the dual-card UE uses the baseband and the radio frequency corresponding to the released second connection for the access and connection of SIM2.

Referring to FIG. 6, in an embodiment of the present disclosure, a device 60 for transmitting a dual-card UE data is provided, the dual-card UE is adapted for installing a first SIM card and a second SIM card, the device 60 may include a circuitry for determining a request of a radio transmission or reception 601, a requesting circuitry 602, and an operating circuitry 603.

Wherein, the circuitry for determining a request of a radio transmission or reception 601 is adapted to determine a request of a radio transmission or reception of the second SIM card when the first SIM card is in a connection state, and the first SIM card is corrected with a first serving base station; the requesting circuitry 602 is adapted to request a time gap of a non-data transmission or a radio frequency circuit chain from the first serving base station based on the request of the radio transmission or reception; the operating circuitry 603 is adapted to perform the radio transmission or reception of the second SIM card at least by the time gap of the non-data transmission or the radio frequency circuit chain.

In embodiments of the present disclosure, when the first card is connected with a first serving base station, the radio transmission or reception of the second SIM card is performed by requesting the time gap of the non-data transmission or the radio frequency circuit chain from the first serving base station, which can have as little impact as possible on a service of the first SIM card when performing a service of the second SIM card. That is, through a coordination between the dual-card UE and the base station, a waste of radio resources can be avoided, and data transmission performances of the two SIM cards of the dual-card UE can be improved.

More about the working principle and working mode of the device60 for transmitting a dual-card UE data may be made reference with related description of the method for transmitting a dual-card UE data as shown from FIG. 1 to FIG. 5, and is not repeated hereinafter.

In an embodiment of the present disclosure, a storage medium having computer instructions stored therein is provided, wherein once the computer instructions are executed, the above method as shown in FIG. 1 or FIG.4 is performed. The storage medium includes a ROM, a RAM, an optical disk, a disk or the like. The storage medium may include a non-volatile or non-transitory memory or the like.

In an embodiment of the present disclosure, a user device comprising a memory and a processor is provided, wherein the memory has computer instructions stored therein, and the method as described in the FIG. 1 to FIG.4 can be performed, once the processor executes the computer instructions. The user device includes, but is not limited to, terminal equipment such as mobile phones, computers, and tablets.

It should be noted that embodiments of the present disclosure are applicable for a 5G (5 Generation) communication system, and various communication systems in the future, such as 6G and 7G.

Specifically, in embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a ROM, a Programmable ROM (PROM), an Erasable PROM (EPROM), an electrically Erasable EPROM (EEPROM), or a flash memory. The volatile memory may be a RAM which functions as an external cache. By way of example but not limitation, various forms of random access memory are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchlink DRAM (SLDRAM), and Direct Rambus RAM (DR RAM).

Specifically, a terminal in the embodiments of the present disclosure may refer to various forms of User Equipment (UE), access terminals, user units, user stations, Mobile Stations (MS), remote stations, remote terminals, mobile devices, user terminals, terminal equipment, wireless communication devices, user agents or user devices. The terminal device may also be a cellular phone, a cordless phone, a Session Initiation Protocol (SIP) phone, a Wireless Local Loop (WLL) station, a Personal Digital Assistant (PDA), a handheld device with the wireless communication function, a computing device or other processing devices connected with a wireless modem, vehicle equipments, wearable devices, terminal devices in the future 5G network, terminal devices in the future Public Land Mobile Network (PLMN), and the like, which is not limited in embodiments of the present disclosure.

Although the present disclosure is disclosed as above, the present disclosure is not limited to this. Those skilled in the art can make various changes and modifications without departing from the spirit and scope of the present disclosure. Therefore, the protection scope of the present disclosure should be subject to the scope defined by the claims.

## Claims

1. A method for transmitting a dual-card User Equipment (UE) data, wherein the dual-card UE is adapted for installing a first Subscriber Identification Module (SIM) card and a second SIM card, **characterized by** comprising:
determining a request of a radio transmission or reception of the second SIM card while the first SIM card is in a connection state, wherein the first SIM card is connected with a first serving base station;
requesting a time gap of a non-data transmission or a radio frequency circuit chain from the first serving base station based on the request of the radio transmission or reception; and
performing the radio transmission or reception of the second SIM card at least by the time gap of the non-data transmission or the radio frequency circuit chain.

2. The method according to claim 1, **characterized in that** said requesting the time gap of the non-data transmission from the first serving base station based on the request of the radio transmission or reception comprises:
determining a starting time point of the request of the radio transmission or reception of the second SIM card; and
requesting the time gap of the non-data transmission from the first serving base station based on the request of the radio transmission or reception at a time point a first offset ahead of the starting time point.

3. The method according to claim 1, **characterized in that** said requesting the time gap of the non-data transmission from the first serving base station based on the request of the radio transmission or reception comprises:
transmitting a request to the first serving base station for a periodic time gap of a non-data transmission, in response to a service to which the request of the radio transmission or reception belongs being a periodic service, and the request comprises a period, a starting time point and a duration of the periodic time gap of the non-data transmission.

4. The method according to claim 1, **characterized in that** said requesting the time gap of the non-data transmission from the first serving base station based on the request of the radio transmission or reception comprises:
requesting the time gap of the non-data transmission and a first subsequent periodic offline mode from the first serving base station in response to the request of the radio transmission or reception being to access a network, wherein an offline time of the first subsequent periodic offline mode from the first serving base station can be used for a data transmission after the second SIM card in a connection state.

5. The method according to claim 4, **characterized in that** said requesting the time gap of the non-data transmission and the first subsequent periodic offline mode comprises:
determining a starting time point of the request of the radio transmission or reception of the second SIM card;
requesting the time gap of the non-data transmission from the first serving base station at a time point a first offset ahead of the starting time point; and
requesting the first subsequent periodic offline mode from the first serving base station at a time point a second offset ahead of the starting time point, wherein parameters of the first subsequent periodic offline mode comprises a period, a starting position and a duration of each offline.

6. The method according to claim 4, **characterized in that** said performing the radio transmission or reception of the second SIM card at least by the time gap of the non-data transmission comprises:
performing an access between the second SIM card and a second serving base station by the time gap of the non-data transmission; and
requesting a second subsequent periodic offline mode from the second serving base station after the second SIM card accesses the second serving base station, wherein parameters of the second subsequent periodic offline mode comprises a period, a starting point and a duration of each offline, wherein an offline time of the second subsequent periodic offline mode from the second serving base station can be used for a data transmission of the first SIM card.

7. The method according to claim 4, further **characterized by** comprising:
requesting another time gap of a non-data transmission from the second serving base station, in response to the offline time of the first subsequent periodic offline mode from the first serving station not satisfying a service need between the second SIM card and the second serving base station after the second SIM card accesses to the second serving base station; and
requesting another first subsequent periodic offline mode from the first serving base station based on the another time gap of the non-data transmission.

8. The method according to claim 1, **characterized in that** said requesting the radio frequency circuit chain from the first serving base station based on the request of the radio transmission or reception comprises:
requesting the first serving base station to release radio frequency circuit chain working on at least one channel among radio frequency circuit chains working on at least two channels, in response to the request of the radio transmission or reception being to access a network and the first SIM card being in a Carrier Aggregation state and using the radio frequency circuit chains working on the at least two channels.

9. The method according to claim 1, **characterized in that** said requesting the radio frequency circuit chain from the first serving base station based on the request of the radio transmission or reception comprises:
requesting the first serving base station to release a radio frequency circuit chain on one corresponding connection of a Dual-Connection, in response to the request of the radio transmission or reception being to access a network and the first SIM card being in a Dual-Connection.

10. The method according to any one of claims 1 to 9, **characterized in that** the request of the radio transmission or reception comprises a network access, a paging reception, a system message reception, a signal measurement and a cell search.

11. A device for transmitting a dual-card User Equipment (UE) data, wherein the dual-card UE is adapted for installing a first Subscriber Identification Module (SIM) card and a second SIM card, **characterized by** comprising:
a circuitry for determining a request of a radio transmission or reception , adapted to determine a request of a radio transmission or reception of the second SIM card while the first SIM card is in a connection state, wherein the first SIM card is corrected with a first serving base station;
a requesting circuitry, adapted to request a time gap of a non-data transmission or a radio frequency circuit chain from the first serving base station based on the request of the radio transmission or reception; and
an operating circuitry, adapted to perform the radio transmission or reception of the second SIM card at least by the time gap of the non-data transmission or the radio frequency circuit chain.

12. A storage medium having computer instructions stored therein, **characterized in that** once the computer instructions are executed, the method based on any one of claims 1 to 10 is performed.

13. A user device comprising a memory and a processor, **characterized in that** the memory has computer instructions stored therein, and the method based on any one of claims 1 to 10 is performed, once the processor executes the computer instructions.
